(19) Europäisches Patentamt
European Patent Office
Office européen des brevets

(11) **EP 4 642 137 A1**

(12) **EUROPEAN PATENT APPLICATION**
published in accordance with Art. 153(4) EPC

(43) Date of publication:
**29.10.2025  Bulletin 2025/44**

(21) Application number: **23924810.7**

(22) Date of filing: **17.05.2023**

(51) International Patent Classification (IPC):
***H04W 72/30*** (2023.01)

(52) Cooperative Patent Classification (CPC):
Y02D 30/70

(86) International application number:
**PCT/CN2023/094882**

(87) International publication number:
**WO 2024/178848 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **02.03.2023  CN 202310256186**

(71) Applicant: **Shenzhen Inovance Technology Co.,
Ltd.
Shenzhen, Guangdong 518000 (CN)**

(72) Inventors:
• **LI, Xiaoyue
  Shenzhen, Guangdong 518000 (CN)**
• **LIN, Zhinan
  Shenzhen, Guangdong 518000 (CN)**
• **LI, Changgeng
  Shenzhen, Guangdong 518000 (CN)**
• **ZHU, Zhijun
  Shenzhen, Guangdong 518000 (CN)**
• **LIU, Qi
  Shenzhen, Guangdong 518000 (CN)**
• **SHI, Hui
  Shenzhen, Guangdong 518000 (CN)**

(74) Representative: **Osterhoff, Utz
Bockermann Ksoll
Griepenstroh Osterhoff
Patentanwälte
Bergstraße 159
44791 Bochum (DE)**

(54) **DOWNLINK SYNCHRONIZATION SIGNAL SENDING METHOD AND APPARATUS, BASE STATION, AND READABLE STORAGE MEDIUM**

(57)    Disclosed are a method and an apparatus for sending a downlink synchronization signal, a base station and a readable storage medium. The method for sending the downlink synchronization signal includes: obtaining a working bandwidth and device data of a signal receiving end; determining a number of extensions of a basic bandwidth of the downlink synchronization signal based on the basic bandwidth of the downlink synchronization signal and the working bandwidth; generating a basic sequence corresponding to the basic bandwidth of the downlink synchronization signal according to the device data and a preset sub-carrier spacing; performing sequence reorganization on the basic sequence according to the number of extensions and a sequence structure of the basic sequence to obtain a target reorganization sequence matching the working bandwidth; and generating the downlink synchronization signal and sending the downlink synchronization signal to the signal receiving end according to the target reorganization sequence.

```
┌──────────────────────────────────────────────┐
│ obtaining the working bandwidth and device    │ ～ S10
│ data of the signal receiving end              │
└──────────────────────────────────────────────┘
                      │
                      ▼
┌──────────────────────────────────────────────┐
│ based on the basic bandwidth of the downlink  │
│ synchronization signal and the working        │ ～ S20
│ bandwidth, determining the number of          │
│ extensions of the basic bandwidth of the      │
│ downlink synchronization signal               │
└──────────────────────────────────────────────┘
                      │
                      ▼
┌──────────────────────────────────────────────┐
│ generating the basic sequence corresponding   │
│ to the basic bandwidth of the downlink        │ ～ S30
│ synchronization signal according to the       │
│ device data and the preset subcarrier spacing │
└──────────────────────────────────────────────┘
                      │
                      ▼
┌──────────────────────────────────────────────┐
│ according to the number of extensions and the │
│ sequence structure of the basic sequence,     │
│ performing sequence reorganization on the      │ ～ S40
│ basic sequence to obtain the target           │
│ reorganization sequence matching the working  │
│ bandwidth                                      │
└──────────────────────────────────────────────┘
                      │
                      ▼
┌──────────────────────────────────────────────┐
│ according to the target reorganization        │
│ sequence, generating the downlink             │ ～ S50
│ synchronization signal and sending the        │
│ downlink synchronization signal to the signal │
│ receiving end                                  │
└──────────────────────────────────────────────┘
```

FIG. 2

**Description**

**CROSS-REFERENCE TO RELATED APPLICATIONS**

This application claims priority to Chinese Patent Application No. 202310256186.6, filed on March 2, 2023, the contents of which are incorporated herein by reference.

**TECHNICAL FIELD**

The present application relates to the technical field of industrial network, and in particular to a method and an apparatus for sending a downlink synchronization signal, a base station and a readable storage medium.

**BACKGROUND**

In the development of wireless networks, downlink synchronization is a crucial step. Downlink synchronization means that after the terminal user is turned on, the user establishes time and frequency synchronization of the downlink transmission link with the base station, and uses cell search to quickly determine the cell number of the cell in which the user is located, after that, terminal initiates a random access process to establish uplink synchronization. After uplink and downlink synchronization, by obtaining detailed system information of the cell and information of neighboring cells, calls can be initiated or paging can be monitored, and the base station can also correctly demodulate the information sent by the user equipment (UE).

With the increase in communication users and the improvement in communication quality requirements, the introduction of "cells" and "small cells" has made users need a more stable downlink synchronization process to assist in completing a series of steps including cell search and cell switching to meet user communication requirements. Therefore, an accurate and stable downlink synchronization process is indispensable for user communication.

In traditional wireless local area networks (LANs), Long Term Evolution (LTE) and New Radio (NR) systems led by Third Generation Partnership Project (3GPP), when performing network time and frequency synchronization, terminals can only use the signals that can be received within their own working bandwidth, that is, the working bandwidth after removing the protection band. Generally speaking, there may be terminals with various working bandwidths in the network. Therefore, in order to allow terminals with the smallest working bandwidth to access, the frequency domain range occupied by the synchronization signal broadcast by the base station can only be less than the minimum working bandwidth in the protocol in principle. For example, a terminal with a bandwidth of 10/20MHz can only use the synchronization signal within 5MHz. The terminal cannot fully utilize the frequency domain resources for synchronization, wasting the opportunity to improve the synchronization detection performance.

**SUMMARY**

The main purpose of the present application is to provide a method, an apparatus and a base station for sending a downlink synchronization signal, and a readable storage medium, aiming to solve the problem that the terminal cannot fully utilize the frequency domain resources of the base station for synchronization.

To achieve the above purpose, the present application provides a method for sending a downlink synchronization signal, including:

obtaining a working bandwidth and device data of a signal receiving end;
determining a number of extensions of a basic bandwidth of the downlink synchronization signal based on the basic bandwidth of the downlink synchronization signal and the working bandwidth;
generating a basic sequence corresponding to the basic bandwidth of the downlink synchronization signal according to the device data and a preset sub-carrier spacing;
performing sequence reorganization on the basic sequence according to the number of extensions and a sequence structure of the basic sequence to obtain a target reorganization sequence matching the working bandwidth; and
generating the downlink synchronization signal and sending the downlink synchronization signal to the signal receiving end according to the target reorganization sequence.

In an embodiment, the generating the basic sequence corresponding to the basic bandwidth of the downlink synchronization signal according to the device data and the preset sub-carrier spacing includes:

determining the sequence structure of the basic sequence according to the device data and the preset sub-carrier spacing;

determining a sequence length of the basic sequence according to the sequence structure, a number of preset useful data sub-carriers and a number of preset direct current, DC sub-carriers; and
generating the basic sequence according to the sequence length.

In an embodiment, the determining the sequence structure of the basic sequence according to the device data and the preset sub-carrier spacing includes:

calculating a maximum frequency deviation range of the signal receiving end according to the device data;
determining a magnitude relationship between the maximum frequency deviation range and the preset sub-carrier spacing; and
in response to that the magnitude relationship is that the preset sub-carrier spacing is less than the maximum frequency deviation range, determining the sequence structure to require inserting a zero value between non-zero values in the basic sequence.

In an embodiment, the determining the sequence length of the basic sequence according to the sequence structure, the number of preset useful data sub-carriers and the number of preset DC sub-carriers includes:

determining a first length of the basic sequence according to the number of preset useful data sub-carriers;
calculating a second length of the target reorganization sequence according to the sequence structure and the first length, and calculating a sum of the second length and the number of preset DC sub-carriers; and
in response to that the sum is less than or equal to the number of preset useful data sub-carriers, configuring the first length as the sequence length of the target reorganization sequence.

In an embodiment, the generating the basic sequence according to the sequence length includes:

determining a root value of the basic sequence according to the sequence length, the root value is a positive integer less than the sequence length; and
generating the basic sequence according to the sequence length and the root value.

In an embodiment, the performing sequence reorganization on the basic sequence according to the number of extensions and the sequence structure of the basic sequence to obtain the target reorganization sequence matching the working bandwidth includes:

extending the basic sequence according to the number of extensions and the sequence structure of the basic sequence to obtain an extended sequence; and
performing sub-carrier mapping on the extended sequence to obtain the target reorganization sequence matching the working bandwidth.

In an embodiment, the expanding the basic sequence according to the number of expansions and the sequence structure of the basic sequence to obtain the extended sequence includes:

according to the sequence structure of the basic sequence, inserting the preset DC sub-carrier into the basic sequence and inserting a zero value between non-zero values to obtain a first basic sequence; and
according to the number of expansions, expanding the first basic sequence to obtain the extended sequence.

In an embodiment, the performing the sub-carrier mapping on the extended sequence to obtain the target reorganization sequence matching the working bandwidth includes:
with the preset DC sub-carrier as a center, mapping the extended sequence to the preset useful data sub-carrier, and obtaining the target reorganization sequence matching the working bandwidth.

In an embodiment, the determining the number of extensions of the basic bandwidth of the downlink synchronization signal based on the basic bandwidth and the working bandwidth of the downlink synchronization signal includes:

determining a multiple between the basic bandwidth of the downlink synchronization signal and the working bandwidth based on the basic bandwidth of the downlink synchronization signal and the working bandwidth; and
configuring the multiple as a number of extensions of a sequence corresponding to the basic bandwidth of the downlink synchronization signal.

In addition, in order to achieve the above purpose, the present application further provides an apparatus for sending a downlink synchronization signal, including:

a bandwidth obtaining module, configured to obtain a working bandwidth and device data of a signal receiving end;

an extension number determination module, configured to determine a number of extensions of a basic bandwidth of the downlink synchronization signal based on the basic bandwidth of the downlink synchronization signal and the working bandwidth;

a sequence generation module, configured to generate a basic sequence corresponding to the basic bandwidth of the downlink synchronization signal according to the device data and a preset sub-carrier spacing;

a sequence reorganization module, configured to perform sequence reorganization on the basic sequence according to the number of extensions and the sequence structure of the basic sequence to obtain a target reorganization sequence matching the working bandwidth; and

a signal sending module, configured to generate the downlink synchronization signal according to the target reorganization sequence and send the downlink synchronization signal to the signal receiving end.

**In** addition, in order to achieve the above purpose, the present application further provides a base station, including: a memory, a processor, and a program for sending a downlink synchronization signal stored in the memory and executable on the processor. When the program for sending the downlink synchronization signal is executed by the processor, the method for sending the downlink synchronization signal as described above is implemented.

**In** addition, in order to achieve the above purpose, the present application further provides a readable storage medium, a program for sending a downlink synchronization signal is stored on the readable storage medium, and when the program for sending the downlink synchronization signal is executed by a processor, the method for sending the downlink synchronization signal as described above is implemented.

**The** present application provides a method and an apparatus for sending the downlink synchronization signal, a base station and a readable storage medium, which obtains the working bandwidth and device data of the signal receiving end, determines the number of extensions of the basic bandwidth of the downlink synchronization signal based on the basic bandwidth of the downlink synchronization signal and the working bandwidth, and generates the basic sequence corresponding to the basic bandwidth of the downlink synchronization signal according to the device data and a preset sub-carrier spacing, so as to realize the generation of the basic bandwidth when the sequence extension is not required, and provide the basic sequence for sequence extension. By performing sequence reorganization on the basic sequence according to the number of extensions and the sequence structure of the basic sequence, a target reorganization sequence that matches the working bandwidth is obtained, and the downlink synchronization signal is generated according to the target reorganization sequence and sent to the signal receiving end. In this way, the basic bandwidth sent by the base station is expanded to obtain a signal sequence that matches the bandwidth of the signal receiving end, so that the signal receiving end can make full use of its own larger bandwidth for signal synchronization. The sequence can be reorganized into a sequence that matches the working bandwidth so that the signal receiving end can receive the bandwidth. The present application generates a sequence as a synchronization sequence under the basic bandwidth and expands it to a sequence supporting a larger bandwidth, so that the signal receiving end can fully utilize the frequency domain resources of the base station for synchronization, thereby improving the utilization rate of the synchronization signal.

**BRIEF DESCRIPTION OF THE DRAWINGS**

FIG. 1 is a schematic structural diagram of a hardware operating environment involved in a method for sending a downlink synchronization signal according to an embodiment of the present application.

FIG. 2 is a flow chart of the method for sending the downlink synchronization signal according to an embodiment of the present application.

FIG. 3 is a flow chart of the method for sending the downlink synchronization signal according to an embodiment of the present application.

FIG. 4 is a flow chart of the method for sending the downlink synchronization signal according to an embodiment of the present application.

FIG. 5 is a schematic diagram of a sequence structure when a working bandwidth is 20MHz after zero insertion in the method for sending the downlink synchronization signal according to the present application.

FIG. 6 is a schematic diagram of an extended sequence structure when the working bandwidth is 40MHz in the method for sending the downlink synchronization signal according to the present application.

FIG. 7 is a schematic diagram of the extended sequence structure when the working bandwidth is 80MHz in the method for sending the downlink synchronization signal according to the present application.

FIG. 8 is a schematic diagram of a sub-carrier mapping mode in the method for sending the downlink synchronization signal according to the present application.

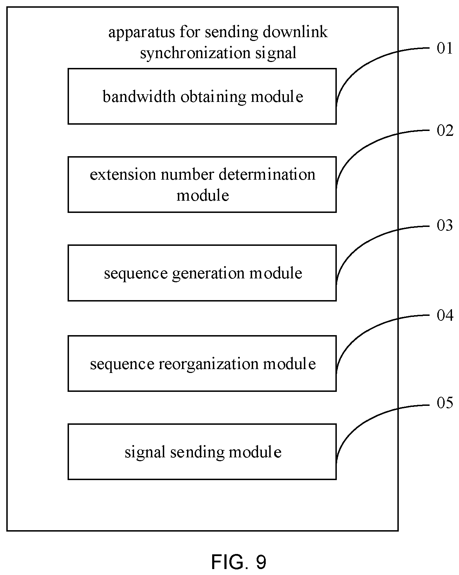

FIG. 9 is a schematic structural diagram of a framework of an apparatus for sending the downlink synchronization signal according to the present application.

The realization of the purpose, functional features and advantages of the present application will be further explained in conjunction with the embodiments and with reference to the accompanying drawings.

**DETAILED DESCRIPTION OF THE EMBODIMENTS**

In order to make the purpose, technical solutions and advantages of the present application more clear, the present application is further described in detail below in conjunction with the accompanying drawings and embodiments. It should be understood that the specific embodiments described here are only used to explain the present application and are not used to limit the present application.

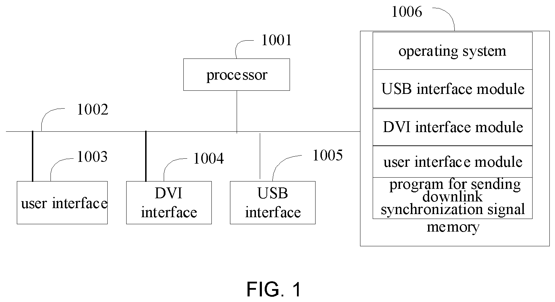

As shown in FIG. 1, FIG. 1 is a schematic structural diagram of a terminal of the hardware operating environment involved in the embodiment of the present application.

The terminal in the embodiment of the present application is a base station.

As shown in FIG. 1, the terminal can include a processor 1001 such as a central processing unit (CPU), a communication bus 1002, a user interface 1003, a digital visual interface (DVI) 1004, a universal serial bus (USB) interface 1005, and a memory 1006. The communication bus 1002 is used to realize connection and communication between these components. The user interface 1003 may include a display, an input unit such as a keyboard. The user interface 1003 may also include a standard wired interface and a wireless interface. The DVI interface 1004 may include a standard wired interface, which is connected to other external devices via a DVI cable. The USB interface 1005 may include a standard wired interface, which is connected to other external devices via a USB cable. The memory 1006 may be a high-speed RAM memory, or a non-volatile memory, such as a disk memory. The memory 1006 may also be a storage device independent of the processor 1001.

In an embodiment, the terminal may also include an audio circuit, etc., which will not be described in detail here.

Those skilled in the art can understand that the terminal structure shown in FIG. 1 does not constitute a limitation on the terminal, and may include more or fewer components than shown in the figure, or combinations of certain components, or components arranged differently.

As shown in FIG. 1, the memory 1006 as a computer storage medium may include an operating system, a DVI interface module, a USB interface module, a user interface module, and a program for sending a downlink synchronization signal.

In the terminal shown in FIG. 1, the DVI interface 1004 is mainly used to connect an external device and communicate data with the external device; the USB interface 1005 is mainly used to connect an external device and communicate data with the external device; the user interface 1003 is mainly used to connect a client and communicate data with the client; and the processor 1001 may be used to call the program for sending the downlink synchronization signal stored in the memory 1006 and perform the following operations:

obtaining a working bandwidth and device data of a signal receiving end;

based on a basic bandwidth of the downlink synchronization signal and the working bandwidth, determining the number of extensions of the basic bandwidth of the downlink synchronization signal;

generating a basic sequence corresponding to the basic bandwidth of the downlink synchronization signal according to the device data and a preset sub-carrier spacing;

according to the number of extensions and the sequence structure of the basic sequence, performing sequence reorganization on the basic sequence to obtain a target reorganization sequence matching the working bandwidth; and

generating the downlink synchronization signal according to the target reorganization sequence and sending the downlink synchronization signal to the signal receiving end.

Furthermore, the processor 1001 may call the program for sending the downlink synchronization signal stored in the memory 1006, and also perform the following operations:

determining the sequence structure of the basic sequence according to the device data and the preset sub-carrier spacing;

determining the number of useful data sub-carriers according to the working bandwidth, the preset sub-carrier spacing and the number of preset protection sub-carriers;

determining a sequence length of the basic sequence according to the sequence structure, the number of useful data sub-carriers and the number of preset direct current (DC) sub-carriers; and
generating a basic sequence according to the sequence length.

Furthermore, the processor 1001 may call the program for sending the downlink synchronization signal stored in the memory 1006, and perform the following operations:

calculating a maximum frequency deviation range of the signal receiving end according to the device data;
determining a magnitude relationship between the maximum frequency deviation range and the preset sub-carrier spacing; and
if the magnitude relationship is that the preset sub-carrier spacing is less than the maximum frequency deviation range, it is determined that the sequence structure needs to insert a zero value between non-zero values in the basic sequence.

Furthermore, the processor 1001 may call the program for sending the downlink synchronization signal stored in the memory 1006, and also perform the following operations:

determining a first length of the basic sequence according to the number of useful data sub-carriers;
calculating a second length of the target reorganization sequence according to the sequence structure and the first length, and calculating a sum of the second length and the number of preset DC sub-carriers; and
if the sum is less than or equal to the number of preset useful data sub-carriers, configuring the first length as the sequence length of the target reorganization sequence.

Furthermore, the processor 1001 may call the program for sending the downlink synchronization signal stored in the memory 1006, and also perform the following operations:

determining a root value of the basic sequence according to the sequence length, the root value is a positive integer less than the sequence length; and
generating a basic sequence according to the sequence length and the root value.

Furthermore, the processor 1001 may call the program for sending the downlink synchronization signal stored in the memory 1006, and also perform the following operations:

according to the number of extensions and the sequence structure of the basic sequence, extending the basic sequence to obtain an extended sequence; and
performing sub-carrier mapping on the extended sequence to obtain the target reorganization sequence matching the working bandwidth.

Furthermore, the processor 1001 may call the program for sending the downlink synchronization signal stored in the memory 1006, and also perform the following operations:

according to the sequence structure of the basic sequence, inserting a preset DC sub-carrier, a preset protection sub-carrier, and a zero value between non-zero values in the basic sequence to obtain a first basic sequence; and
according to the number of extensions, expanding the first basic sequence to obtain an extended sequence.

Furthermore, the processor 1001 can call the program for sending the downlink synchronization signal stored in the memory 1006, and also perform the following operations:
with the preset DC sub-carrier as a center, mapping the reorganized sequence to the useful data sub-carrier of the target reorganization sequence, and obtaining the target reorganization sequence matching the working bandwidth.
Further, the processor 1001 may call the program for sending the downlink synchronization signal stored in the memory 1006, and perform the following operations:

based on the basic bandwidth of the downlink synchronization signal and the working bandwidth, determining a multiple between the basic bandwidth of the downlink synchronization signal and the working bandwidth; and
configuring the multiple as the number of extensions of the sequence corresponding to the basic bandwidth of the downlink synchronization signal.

The specific embodiments of the base station of the present application are basically the same as the embodiments of the program for sending the downlink synchronization signal described below, and will not be described in detail here.

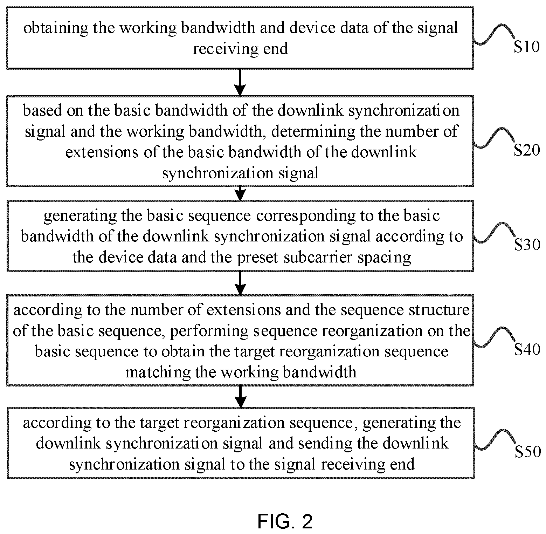

Please refer to FIG. 2, FIG. 2 is a flow chart of the method for sending the downlink synchronization signal according to an embodiment of the present application. The method for sending the downlink synchronization signal provided in this embodiment includes the following steps.

Step S10, obtaining the working bandwidth and device data of the signal receiving end.

The present application is applied to a base station, i.e., a public mobile communication base station, which is an interface device for a signal receiving end to access the Internet. The signal receiving end involved, i.e., a user equipment (UE), can represent any applicable end-user equipment, and may include devices such as a wireless transmit/receive unit (WTRU), a mobile station, a mobile node, a mobile device, a fixed or mobile contract unit, a pager, a mobile phone, a personal digital assistant (PDA), a smart phone, a notebook computer, a computer, a touch screen device, a wireless sensor or a consumer electronic device. The working bandwidth refers to the frequency range of the signal receiving end when it is working, including 20MHz, 40MHz and 80MHz. When the base station obtains the working bandwidth of the signal receiving end, it can collect the signal broadcast by the signal receiving end. The device data refers to the hardware data of the signal receiving end, that is, the crystal oscillator.

Step S20, based on the basic bandwidth of the downlink synchronization signal and the working bandwidth, determining the number of extensions of the basic bandwidth of the downlink synchronization signal.

In a wireless communication system, the downlink synchronization between the base station and the signal receiving end is completed by each sending a synchronization sequence, which the receiving end detects. Therefore, during the downlink synchronization between the base station and the signal receiving end, synchronization will be performed according to the sequence corresponding to the basic bandwidth of the base station. The basic bandwidth refers to the minimum bandwidth that the base station can send. The working bandwidth refers to the bandwidth used by the signal receiving end when working.

As an embodiment, the basic bandwidth is set to 20MHz. If the working bandwidth is 20MHz, no extension is needed, meaning the number of extensions is 0. If the working bandwidth is 40MHz, the sequence needs to be extended 2 times. If the working bandwidth is 80MHz, the sequence needs to be extended 4 times.

In an embodiment, step S20 further includes:

step A21, based on the basic bandwidth of the downlink synchronization signal and the working bandwidth, determining the multiple between the basic bandwidth of the downlink synchronization signal and the working bandwidth; and

step A22, configuring the multiple as the number of extensions of the sequence corresponding to the basic bandwidth of the downlink synchronization signal.

In this embodiment, in a communication system, the basic bandwidth can be set to 20MHz, and the working bandwidth includes 20MHz, 40MHz and 80MHz. If the working bandwidth is 20MHz, it indicates that there is no need to extend the sequence, and the multiple is 0, meaning that the number of extensions is 0. The working bandwidth is represented by K, and is 40MHz and 80MHz, then $K=20MHz*(2^N)$, N=1, 2, that is, the multiple between the basic bandwidth and the working bandwidth is $(2^N)$, N=1, 2, meaning that the number of extensions is 2 or 4.

Step S30, generating the basic sequence corresponding to the basic bandwidth of the downlink synchronization signal according to the device data and the preset sub-carrier spacing.

In an embodiment, the preset sub-carrier spacing is selected as 78.125kHz. Those skilled in the art can also select 156.25kHz as needed, which is not limited in the present application. Since the base station and the signal receiving end need to be synchronized through a sequence, the basic sequence that matches the basic bandwidth can be generated first, and then the basic sequence can be expanded according to the number of expansions.

Step S40, according to the number of extensions and the sequence structure of the basic sequence, performing sequence reorganization on the basic sequence to obtain the target reorganization sequence matching the working bandwidth.

The number of extensions includes 0, 2, and 4, and the sequence structure includes a structure that requires zero insertion in the sequence and a structure that does not require zero insertion in the sequence. When the number of extensions is 2 and 4, or the sequence structure is a structure that requires zero insertion, sequence reorganization is required. The sequence reorganization includes extension and sub-carrier mapping. For the specific reorganization method, please refer to the following embodiment, which will not be described in detail in the present application.

Step S50, according to the target reorganization sequence, generating the downlink synchronization signal and sending the downlink synchronization signal to the signal receiving end.

After obtaining the target reorganization sequence, the inverse Fourier transform (IFFT) $N_{IFFT}$ is obtained according to the set sub-carrier spacing. The NIFFT can be obtained by calculating the quotient between the basic bandwidth and the sub-carrier spacing. The sub-carrier spacing is 78.125kHz. When the basic bandwidth is 20MHz, NIFFT=256.

When generating the downlink synchronization signal, it is necessary to perform an inverse Fourier transform, namely, IFFT transform, on the target reorganization sequence, and then add a cyclic prefix, namely, CP, to generate the downlink synchronization signal. The IFFT transform is to perform a 256-point IFFT transform on the generated target reorganization sequence. The CP is added to the front of the mapped sequence time domain signal, and the CP is obtained by intercepting the tail of the mapped sequence time domain signal.

The present application provides a method for sending a downlink synchronization signal, which obtains the working bandwidth and device data of the signal receiving end, determines the number of extensions of the basic bandwidth of the downlink synchronization signal based on the basic bandwidth of the downlink synchronization signal and the working bandwidth, and generates the basic sequence corresponding to the basic bandwidth of the downlink synchronization signal according to the device data and the preset sub-carrier spacing, so as to realize the generation of the basic bandwidth when sequence extension is not required, and provide the basic sequence for sequence extension. By performing sequence reorganization on the basic sequence according to the number of extensions and the sequence structure of the basic sequence, a target reorganization sequence that matches the working bandwidth is obtained, and the downlink synchronization signal is generated according to the target reorganization sequence and sent to the signal receiving end. The basic bandwidth sent by the base station is expanded to obtain a signal sequence that matches the bandwidth of the signal receiving end, so that the signal receiving end can make full use of its own larger bandwidth for signal synchronization. The sequence can be reorganized into a sequence that matches the working bandwidth so that the signal receiving end can receive the bandwidth. The present application generates a sequence as a synchronization sequence under the basic bandwidth and expands it to a sequence that supports a larger bandwidth, so that the signal receiving end can fully utilize the frequency domain resources of the base station for synchronization, thereby improving the utilization rate of the synchronization signal.

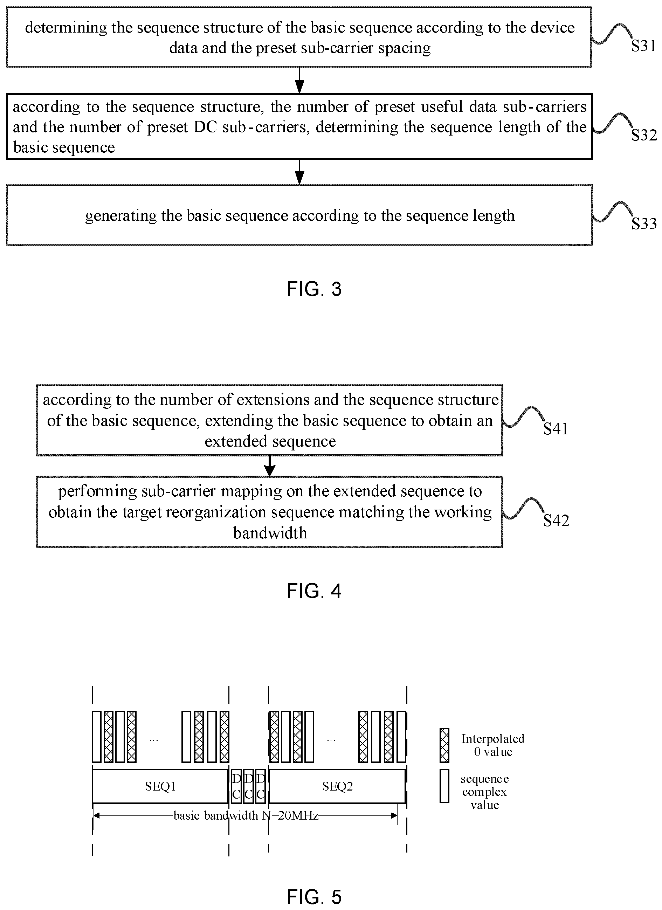

Further, referring to FIG. 3, based on the above embodiment of the method for sending the downlink synchronization signal according to the present application, another embodiment of the present application is proposed, and the step S30 further includes:

step S31, determining the sequence structure of the basic sequence according to the device data and the preset sub-carrier spacing.

The sequence structure includes two types, one is a structure in which zero insertion is required in the sequence, and the other is a structure in which zero insertion is not required in the sequence. The zero insertion refers to inserting a virtual sub-carrier in the sequence so that the sequence is repeated twice in the time domain.

In an embodiment, the step S31 further includes:

step A311, calculating the maximum frequency deviation range of the signal receiving end according to the device data.

The device data is the crystal oscillator of the signal receiving end. After determining the crystal oscillator of the signal receiving end, the center frequency of the crystal oscillator is calculated according to the crystal oscillator, and then the maximum frequency deviation range of the signal receiving end is determined according to the center frequency. For example, when the accuracy of the crystal oscillator is less than $\pm 10$ppm, assuming that the center frequency is 5.8GHz, the maximum frequency deviation range of the signal receiving end is calculated to be $\pm 58$kHz; assuming that the center frequency is 3.33GHz, the center frequency of the crystal oscillator is $\pm 33.33$kHz. As an embodiment, the maximum frequency deviation range is selected as $\pm 58$kHz in the communication system of the present application for illustration.

Step A312, determining the magnitude relationship between the maximum frequency deviation range and the preset sub-carrier spacing.

Step A313, if the magnitude relationship is that the preset sub-carrier spacing is less than the maximum frequency deviation range, it is determined that the sequence structure requires inserting the zero value between non-zero values in the basic sequence.

In order to ensure that the preset sub-carrier spacing is greater than the maximum frequency deviation range, so that the preset sub-carrier spacing can cover the maximum frequency deviation range, it is necessary to determine the magnitude between the preset sub-carrier spacing and the maximum frequency deviation range. In this embodiment, with the sub-carrier spacing (SCS) of 78.125kHz, inserting a single zero at intervals is sufficient to make the time domain sequence repeat twice, the actual sequence symbol length becomes 12.8us, and the frequency deviation estimation range also becomes $\pm (1/6.4/2) = \pm 78.125$kHz $> \pm 58$kHz, which meets the system requirements. Therefore, in this embodiment, a zero insertion operation is required.

It should be noted that the sequence is formed by multiple sub-carriers, including actual sub-carriers and virtual sub-carriers. The non-zero value refers to the actual sub-carrier, which can be represented by 1; zero refers to the virtual sub-carrier, which can be represented by 0. Therefore, zero insertion means inserting 0 every 1 in the sequence.

Step S32, according to the sequence structure, the number of preset useful data sub-carriers and the number of preset DC sub-carriers, determining the sequence length of the basic sequence.

The preset useful data sub-carrier refers to the useful data sub-carrier corresponding to the working bandwidth, and specifically, the number of preset useful data sub-carriers can be 240.

In an embodiment, the step S32 further includes:

step A321, determining the first length of the basic sequence according to the number of preset useful data sub-carriers.

When determining the first length, a first length less than the number of useful data sub-carriers may be selected. For example, when the number of useful data sub-carriers is 240, 110, 111, 112 less than 240 may be selected as the first length. In this embodiment, a length of 113 is selected as the preferred first length in the subsequent discussion. It should be noted that when selecting the first length, a length less than half of the number of useful data sub-carriers may be preferentially selected as the first length so that the final sequence length is less than the number of useful data sub-carriers.

Step A322, according to the sequence structure and the first length, calculating the second length of the target reorganization sequence, and calculating the sum of the second length and the number of preset DC sub-carriers,

In this embodiment, the preset DC sub-carrier is in the middle of the sequence, that is, the DC sub-carrier in FIG. x, and the number is 3.

The second length and the sum are calculated as follows: when the first length is 113 and the sequence structure is a structure that requires zero insertion, since the sequence is inserted with 0 every other 1, the second length will become 113 times 2 minus 1, that is, 225, and further, the sum is 228. If the sequence structure is a structure that does not require zero insertion, the second length is still 113, and further, the sum is 116.

Step A323, if the sum is less than or equal to the number of preset useful data sub-carriers, the first length is used as the sequence length of the target reorganization sequence.

Step A324, if the sum is greater than the number of useful data sub-carriers, step A331 is executed until the sum is less than or equal to the number of useful data sub-carriers.

In this embodiment, in order to avoid the problem that the recombined sequence generated according to the sequence length cannot be mapped to sub-carriers, the first length can be determined as the sequence length of the target reorganization sequence only when the sum is less than the number of useful data sub-carriers.

Step S33, generating the basic sequence according to the sequence length.

In an embodiment, the step S33 further includes:

step A331, determining the root value of the basic sequence according to the sequence length, the root value is a positive integer less than the sequence length.

When the sequence length is 113, the root value is 1, 2, 3,...,112, that is, one of the positive integers less than 113, represented by u. The specific root value can be arbitrarily selected in this range, which is not limited in the present application.

Step A332, generating the basic sequence according to the sequence length and the root value.

The reorganization sequence is generated by the following formula, and the reorganization sequence is a ZC sequence,

$$x_u(n) = e^{-j\pi\mu n(n+1)/N_{zc}}, n = 0,1,2,\ldots N_{zc} - 1 (N_{zc} \text{ is an odd number})$$

Where u is the root value of the generated ZC sequence, {1, 2, 3,... , $N_{zc}$-1}; $N_{zc}$ is the sequence length of the generated ZC sequence, and $N_{zc}$ is less than or equal to the total number of sub-carriers. It should be noted that the obtained ZC sequence itself has the characteristic of being symmetrical about the center in the frequency domain.

In the present application, by determining the sequence structure of the basic sequence according to the device data and the preset sub-carrier spacing, then determining the sequence length of the basic sequence according to the sequence structure, the number of preset useful data sub-carriers and the number of preset DC sub-carriers, and generating the basic sequence according to the sequence length, it is possible to generate the basic bandwidth when sequence extension is not required, thereby providing a basic sequence for sequence extension.

Further, referring to FIG. 4, based on the embodiment of the method for sending the downlink synchronization signal according to the present application, another embodiment of the present application is proposed, and the step S40 further includes:

step S41, according to the number of extensions and the sequence structure of the basic sequence, extending the basic sequence to obtain an extended sequence.

When the number of extensions is 2 or 4, or the sequence structure requires zero insertion, it is necessary to extend the basic sequence.

In an embodiment, the step A41 further includes:

step A411, according to the sequence structure of the basic sequence, inserting a preset DC sub-carrier in the basic sequence and inserting a zero value between non-zero values to obtain a first basic sequence.

Please refer to FIG. 5, FIG. 5 is a schematic diagram of the sequence structure when the bandwidth is 20MHz after zero insertion. In FIG. 5 the shaded part is 0, and the values on both sides of the shaded part are 1. If the sequence structure requires a zero insertion operation, the basic sequence is inserted with 0 every other 1. For example, the sequence length of the basic sequence is 113, and after the zero insertion operation, the length of the first basic sequence obtained becomes 225.

In addition, the number of preset DC sub-carriers can be set to 3 according to the communication standard protocol, and the length of the first basic sequence after inserting the preset DC sub-carrier becomes 228.

Step A412, according to the number of extensions, extending the first basic sequence to obtain an extended sequence.

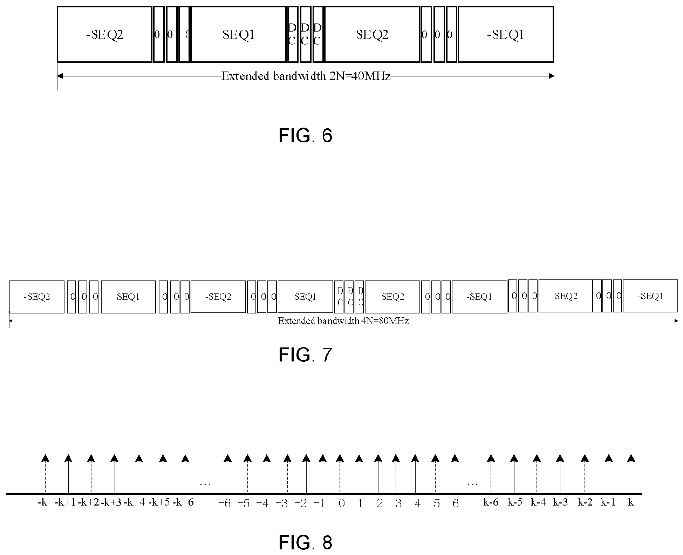

When the number of extensions is 0, it indicates that the sequence does not need to be extended, and the resulting extended sequence is still the original basic sequence. When the number of extensions is 2, from the perspective of sequence symmetry, the sequence is copied and flipped twice to obtain an extended sequence under a bandwidth of 40MHz. For details, please refer to FIG. 5 and FIG. 6, FIG. 5 is a schematic diagram of the sequence structure when the bandwidth is 20MHz, and FIG. 6 is a schematic diagram of the extended sequence structure when the bandwidth is 40MHz. After the 20MHz sequence structure diagram is copied and flipped twice, the 40MHz structure diagram in FIG. 6 will be obtained. Since the basic sequence under the basic bandwidth of 20MHz has the characteristic of being symmetrical with the center, SEQ1=SEQ2 in the figure. After SEQ1 and SEQ2 are copied at both ends of the basic bandwidth, they are flipped to obtain the sequence structure shown in FIG. 6.

When the number of extensions is 4, please refer to FIG. 7, FIG. 7 is a schematic diagram of the sequence structure corresponding to a bandwidth of 80 MHz. After copying and flipping the basic sequence corresponding to the basic bandwidth of 20 MHz 4 times, the sequence structure shown in FIG. 7 can be obtained.

Step S42, performing sub-carrier mapping on the extended sequence to obtain the target reorganization sequence matching the working bandwidth.

sub-carrier mapping refers to mapping the extended sequence to the useful data sub-carrier.

In an embodiment, the step A42 further includes:

Step A421, with the preset DC sub-carrier as the center, mapping the extended sequence to the preset useful data sub-carrier, and obtaining the target reorganization sequence matching the working bandwidth.

Please refer to FIG. 8, FIG. 8 is a schematic diagram of the sub-carrier mapping mode. The preset useful data sub-carrier of the target reorganization sequence can be set to 240. 0 in FIG. 8 represents the DC sub-carrier, and k is 120. Since the length of the extended sequence is 228, when performing sub-carrier mapping, the DC sub-carrier is used as the center and the extended sequence is mapped one by one to the preset useful data sub-carriers on both sides. When the length of the extended sequence, that is, the number of sub-carriers, is inconsistent with the number of preset useful data sub-carriers, a 0-padding operation is performed on both sides of the extended sequence to make the length of the extended sequence consistent with the preset useful data sub-carrier, that is, the sub-carrier mapping is completed, and the target reorganization sequence that conforms to the working bandwidth is obtained.

In the present application, the basic sequence is extended according to the number of extensions and the sequence structure of the basic sequence to obtain an extended sequence, and sub-carrier mapping is performed on the extended sequence to obtain the target reorganization sequence matching the working bandwidth. This achieves the improvement of the utilization rate of the synchronization signal by generating a sequence as a synchronization sequence under the basic bandwidth and expanding it to a sequence supporting a larger bandwidth by means of segmented replication and flipping.

In addition, the embodiment of the present application also proposes a readable storage medium, on which a program for sending the downlink synchronization signal is stored, and when the program for sending the downlink synchronization signal is executed by a processor, the following operations are implemented:

obtaining the working bandwidth and device data of the signal receiving end;

based on the basic bandwidth of the downlink synchronization signal and the working bandwidth, determining the number of extensions of the basic bandwidth of the downlink synchronization signal;

based on the device data and the preset sub-carrier spacing, generating the basic sequence corresponding to the basic bandwidth of the downlink synchronization signal;

according to the number of extensions and the sequence structure of the basic sequence, performing sequence reorganization on the basic sequence to obtain the target reorganization sequence matching the working bandwidth; and

according to the target reorganization sequence, generating the downlink synchronization signal and sending the downlink synchronization signal to the signal receiving end.

Furthermore, when the position detection program is executed by the processor, the following operations are also implemented:

determining the sequence structure of the basic sequence according to the device data and the preset sub-carrier spacing;

determining the sequence length of the basic sequence according to the sequence structure, the number of preset useful data sub-carriers and the number of preset DC sub-carriers; and
generating the basic sequence according to the sequence length.

Furthermore, when the position detection program is executed by the processor, the following operations are also implemented:

calculating the maximum frequency deviation range of the signal receiving end according to the device data;
determining the magnitude relationship between the maximum frequency deviation range and the preset sub-carrier spacing; and
if the magnitude relationship is that the preset sub-carrier spacing is less than the maximum frequency deviation range, it is determined that the sequence structure needs to insert the zero value between non-zero values in the basic sequence.

Furthermore, when the position detection program is executed by the processor, the following operations are also implemented:

determining the first length of the basic sequence according to the number of preset useful data sub-carriers;
calculating the second length of the target reorganization sequence according to the sequence structure and the first length, and calculating the sum of the second length and the number of preset DC sub-carriers; and
if the sum is less than or equal to the number of preset useful data sub-carriers, configuring the first length as the sequence length of the target reorganization sequence.

Furthermore, when the position detection program is executed by the processor, the following operations are also implemented:

determining the root value of the basic sequence according to the sequence length, the root value is a positive integer less than the sequence length;
generating the basic sequence according to the sequence length and the root value.

Furthermore, when the position detection program is executed by the processor, the following operations are also implemented:

extending the basic sequence to obtain an extended sequence according to the number of extensions and the sequence structure of the basic sequence; and
performing sub-carrier mapping on the extended sequence to obtain the target reorganization sequence matching the working bandwidth.

Furthermore, when the position detection program is executed by the processor, the following operations are also implemented:

according to the sequence structure of the basic sequence, inserting the preset DC sub-carrier into the basic sequence and inserting the zero value between non-zero values to obtain the first basic sequence; and
according to the number of extensions, extending the first basic sequence to obtain an extended sequence.

Further, when the position detection program is executed by the processor, the following operations are also implemented:
with the preset DC sub-carrier as the center, mapping the extended sequence to the preset useful data sub-carrier, and obtaining the target reorganization sequence matching the working bandwidth.

Furthermore, when the position detection program is executed by the processor, the following operations are also implemented:

based on the basic bandwidth of the downlink synchronization signal and the working bandwidth, determining the multiple between the basic bandwidth of the downlink synchronization signal and the working bandwidth; and
configuring the multiple as the number of extensions of the sequence corresponding to the basic bandwidth of the downlink synchronization signal.

The present application also proposes a readable storage medium on which a computer program is stored. The readable storage medium may be the memory 02 in the mass spectrometer of FIG. 1, or may be at least one of a read-only memory (ROM)/random access memory (RAM), a magnetic disk, and an optical disk. The readable storage medium includes some information to enable the mass spectrometer to execute the methods described in each embodiment of the present application.

It should be noted that, in this article, the terms "include", "comprise" or any other variants thereof are intended to cover non-exclusive inclusion, so that a process, method, article or system including a series of elements includes not only those elements, but also other elements not explicitly listed, or also includes elements inherent to such process, method, article or system. In the absence of further restrictions, an element defined by the sentence "includes a..." does not exclude the existence of other identical elements in the process, method, article or system including the element.

The serial numbers of the embodiments of the present application are for description only and do not represent the advantages and disadvantages of the embodiments.

Through the description of the above embodiments, those skilled in the art can clearly understand that the above embodiment methods can be implemented by means of software plus a necessary general hardware platform, or by hardware, but in many cases the former is better.

The above are only some embodiments of the present application, and do not limit the scope of the present application. Any equivalent structure or equivalent process transformation made by using the contents of the specification and drawings of the present application, or directly or indirectly applied in other related technical fields, are also included in the scope of the present application.

## Claims

1.  A method for sending a downlink synchronization signal, **characterized by** comprising:

    obtaining a working bandwidth and device data of a signal receiving end;
    determining a number of extensions of a basic bandwidth of the downlink synchronization signal based on the basic bandwidth of the downlink synchronization signal and the working bandwidth;
    generating a basic sequence corresponding to the basic bandwidth of the downlink synchronization signal according to the device data and a preset sub-carrier spacing;
    performing sequence reorganization on the basic sequence according to the number of extensions and a sequence structure of the basic sequence to obtain a target reorganization sequence matching the working bandwidth; and
    generating the downlink synchronization signal and sending the downlink synchronization signal to the signal receiving end according to the target reorganization sequence.

2.  The method according to claim 1, wherein the generating the basic sequence corresponding to the basic bandwidth of the downlink synchronization signal according to the device data and the preset sub-carrier spacing comprises:

    determining the sequence structure of the basic sequence according to the device data and the preset sub-carrier spacing;
    determining a sequence length of the basic sequence according to the sequence structure, a number of preset useful data sub-carriers and a number of preset direct current (DC) sub-carriers; and
    generating the basic sequence according to the sequence length.

3.  The method according to claim 2, wherein the determining the sequence structure of the basic sequence according to the device data and the preset sub-carrier spacing comprises:

    calculating a maximum frequency deviation range of the signal receiving end according to the device data;
    determining a magnitude relationship between the maximum frequency deviation range and the preset sub-carrier spacing; and
    in response to that the magnitude relationship is that the preset sub-carrier spacing is less than the maximum frequency deviation range, determining the sequence structure to require inserting a zero value between non-zero values in the basic sequence.

4.  The method according to claim 3, wherein the determining the sequence length of the basic sequence according to the sequence structure, the number of preset useful data sub-carriers and the number of preset DC sub-carriers comprises:

determining a first length of the basic sequence according to the number of preset useful data sub-carriers;
calculating a second length of the target reorganization sequence according to the sequence structure and the first length, and calculating a sum of the second length and the number of preset DC sub-carriers; and
in response to that the sum is less than or equal to the number of preset useful data sub-carriers, configuring the first length as the sequence length of the target reorganization sequence.

5. The method according to claim 4, wherein the generating the basic sequence according to the sequence length comprises:

determining a root value of the basic sequence according to the sequence length, wherein the root value is a positive integer less than the sequence length; and
generating the basic sequence according to the sequence length and the root value.

6. The method according to claim 5, wherein the performing sequence reorganization on the basic sequence according to the number of extensions and the sequence structure of the basic sequence to obtain the target reorganization sequence matching the working bandwidth comprises:

extending the basic sequence according to the number of extensions and the sequence structure of the basic sequence to obtain an extended sequence; and
performing sub-carrier mapping on the extended sequence to obtain the target reorganization sequence matching the working bandwidth.

7. The method according to claim 6, wherein the expanding the basic sequence according to the number of expansions and the sequence structure of the basic sequence to obtain the extended sequence comprises:

according to the sequence structure of the basic sequence, inserting the preset DC sub-carrier into the basic sequence and inserting a zero value between non-zero values to obtain a first basic sequence; and
according to the number of expansions, expanding the first basic sequence to obtain the extended sequence.

8. The method according to claim 7, wherein the performing the sub-carrier mapping on the extended sequence to obtain the target reorganization sequence matching the working bandwidth comprises:
with the preset DC sub-carrier as a center, mapping the extended sequence to the preset useful data sub-carrier, and obtaining the target reorganization sequence matching the working bandwidth.

9. The method according to claim 1, wherein the determining the number of extensions of the basic bandwidth of the downlink synchronization signal based on the basic bandwidth of the downlink synchronization signal and the working bandwidth comprises:

determining a multiple between the basic bandwidth of the downlink synchronization signal and the working bandwidth; and
configuring the multiple as a number of extensions of a sequence corresponding to the basic bandwidth of the downlink synchronization signal.

10. An apparatus for sending a downlink synchronization signal, **characterized by** comprising:

a bandwidth obtaining module, configured to obtain a working bandwidth and device data of a signal receiving end;
an extension number determination module, configured to determine a number of extensions of a basic bandwidth of the downlink synchronization signal based on the basic bandwidth of the downlink synchronization signal and the working bandwidth;
a sequence generation module, configured to generate a basic sequence corresponding to the basic bandwidth of the downlink synchronization signal according to the device data and a preset sub-carrier spacing;
a sequence reorganization module, configured to perform sequence reorganization on the basic sequence according to the number of extensions and the sequence structure of the basic sequence to obtain a target reorganization sequence matching the working bandwidth; and
a signal sending module, configured to generate the downlink synchronization signal according to the target reorganization sequence and send the downlink synchronization signal to the signal receiving end.

11. A base station, **characterized by** comprising: a memory, a processor, and a program for sending a downlink synchronization signal stored in the memory and executable on the processor, wherein when the program for sending the downlink synchronization signal is executed by the processor, the method for sending the downlink synchronization signal according to any one of claims 1 to 9 is implemented.

12. A readable storage medium, **characterized in that** a program for sending a downlink synchronization signal is stored on the readable storage medium, and when the program for sending the downlink synchronization signal is executed by a processor, the method for sending the downlink synchronization signal according to any one of claims 1 to 9 is implemented.

1006

1001

processor

1002

operating system

USB interface module

DVI interface module

user interface module

program for sending downlink synchronization signal

memory

1003

1004

1005

user interface

DVI interface

USB interface

FIG. 1

obtaining the working bandwidth and device data of the signal receiving end ⟩ S10

based on the basic bandwidth of the downlink synchronization signal and the working bandwidth, determining the number of extensions of the basic bandwidth of the downlink synchronization signal ⟩ S20

generating the basic sequence corresponding to the basic bandwidth of the downlink synchronization signal according to the device data and the preset subcarrier spacing ⟩ S30

according to the number of extensions and the sequence structure of the basic sequence, performing sequence reorganization on the basic sequence to obtain the target reorganization sequence matching the working bandwidth ⟩ S40

according to the target reorganization sequence, generating the downlink synchronization signal and sending the downlink synchronization signal to the signal receiving end ⟩ S50

FIG. 2

determining the sequence structure of the basic sequence according to the device data and the preset sub-carrier spacing ⟩ S31

according to the sequence structure, the number of preset useful data sub-carriers and the number of preset DC sub-carriers, determining the sequence length of the basic sequence ⟩ S32

generating the basic sequence according to the sequence length ⟩ S33

FIG. 3

according to the number of extensions and the sequence structure of the basic sequence, extending the basic sequence to obtain an extended sequence ⟩ S41

performing sub-carrier mapping on the extended sequence to obtain the target reorganization sequence matching the working bandwidth ⟩ S42

FIG. 4

SEQ1   DC DC DC   SEQ2

basic bandwidth N=20MHz

Interpolated 0 value

sequence complex value

FIG. 5

| -SEQ2 | 0 | 0 | 0 | SEQ1 | D C | D C | D C | SEQ2 | 0 | 0 | 0 | -SEQ1 |
|---|---|---|---|---|---|---|---|---|---|---|---|---|

Extended bandwidth 2N=40MHz

FIG. 6

| -SEQ2 | 0 | 0 | 0 | SEQ1 | 0 | 0 | 0 | -SEQ2 | 0 | 0 | 0 | 0 | SEQ1 | D C | D C | D C | SEQ2 | 0 | 0 | 0 | -SEQ1 | 0 | 0 | 0 | 0 | SEQ2 | 0 | 0 | 0 | -SEQ1 |
|---|---|---|---|---|---|---|---|---|---|---|---|---|---|---|---|---|---|---|---|---|---|---|---|---|---|---|---|---|---|---|

Extended bandwidth 4N=80MHz

FIG. 7

-k  -k+1 -k+2 -k+3 -k+4 -k+5 -k+6  ...  −6  −5  −4  −3  −2  −1  0  1  2  3  4  5  6  ...  k-6  k-5  k-4  k-3  k-2  k-1  k

FIG. 8

apparatus for sending downlink
synchronization signal

01

bandwidth obtaining module

02

extension number determination
module

03

sequence generation module

04

sequence reorganization module

05

signal sending module

FIG. 9

## INTERNATIONAL SEARCH REPORT

| International application No. |
| --- |
| **PCT/CN2023/094882** |

### A. CLASSIFICATION OF SUBJECT MATTER

H04W 72/30(2023.01)i

According to International Patent Classification (IPC) or to both national classification and IPC

### B. FIELDS SEARCHED

Minimum documentation searched (classification system followed by classification symbols)

IPC: H04W,H04Q,H04M,H04L

Documentation searched other than minimum documentation to the extent that such documents are included in the fields searched

Electronic data base consulted during the international search (name of data base and, where practicable, search terms used)

CNABS, CNKI, CNTXT, VEN, ENTXT, DWPI, 3GPP: 下行同步信号, 发送, 接收端, 工作带宽, 扩展, 次数, 预设, 子载波, 间隔, 基础, 序列, 序列长度, 基础序列, 映射, downlink synchronization signals, transmission, reception, operating bandwidth, extension, number of times, presets, subcarriers, spacing, base, sequence, sequence length, base sequence, mapping

### C. DOCUMENTS CONSIDERED TO BE RELEVANT

| Category* | Citation of document, with indication, where appropriate, of the relevant passages | Relevant to claim No. |
| --- | --- | --- |
| A | CN 106301735 A (BEIJING NORTHERN FIBERHOME TECHNOLOGIES CO., LTD.) 04 January 2017 (2017-01-04)<br>description, paragraphs [0055]-[0075] | 1-12 |
| A | CN 101119144 A (TD TECH LTD.) 06 February 2008 (2008-02-06)<br>entire document | 1-12 |
| A | CN 110601808 A (HYTERA COMMUNICATIONS CO., LTD.) 20 December 2019 (2019-12-20)<br>entire document | 1-12 |
| A | EP 2595425 A1 (PANASONIC CORP.) 22 May 2013 (2013-05-22)<br>entire document | 1-12 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 November 2023** | **13 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/094882**

| Patent document cited in search report | | | Publication date (day/month/year) | Patent family member(s) | | | Publication date (day/month/year) |
|---|---|---|---|---|---|---|---|
| CN | 106301735 | A | 04 January 2017 | None | | | |
| CN | 101119144 | A | 06 February 2008 | None | | | |
| CN | 110601808 | A | 20 December 2019 | None | | | |
| EP | 2595425 | A1 | 22 May 2013 | WO | 2013072222 | A1 | 23 May 2013 |
| | | | | JP | 2015502089 | A | 19 January 2015 |
| | | | | JP | 6096793 | B2 | 15 March 2017 |
| | | | | EP | 2781118 | A1 | 24 September 2014 |
| | | | | EP | 2781118 | B1 | 17 July 2019 |
| | | | | US | 2014254452 | A1 | 11 September 2014 |
| | | | | US | 9237522 | B2 | 12 January 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310256186